# EUROPEAN PATENT SPECIFICATION

(11) **EP 3 570 587 B1**
(45) Date of publication and mention of the grant of the patent: **10.08.2022**
(21) Application number: 17891082.4
(22) Date of filing: 29.12.2017
(51) Int. Cl.: H04L 1/18, H04W 28/08

(54) **DATA RETRANSMISSION METHOD AND APPARATUS**
DATENNEUÜBERTRAGUNGSVERFAHREN UND -VORRICHTUNG
PROCÉDÉ ET APPAREIL DE RETRANSMISSION DE DONNÉES

(30) Priority: 16.01.2017 CN 201710032643
(43) Date of publication of application: 20.11.2019
(73) Proprietor: ZTE Corporation, Shenzhen, Guangdong 518057 (CN)
(72) Inventor: ZHANG, Dongying, Shenzhen Guangdong 518057 (CN); WU, Yumin, Shenzhen Guangdong 518057 (CN)
(74) Representative: Regimbeau
(86) International application number: PCT/CN2017/120322
(87) International publication number: WO 2018/130099

(56) References cited:
- WO-A1-2014/019441
- CN-A- 102 158 901
- HTC: "HARQ retransmission in grant-free NOMA", 3GPP DRAFT; R1-1701009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 10 January 2017 (2017-01-10), XP051203299, Retrieved from the Internet: URL:http://www.3gpp.org/ftp/tsg_ran/WG1_RL 1/TSGR1_AH/NR_AH_1701/Docs/ [retrieved on 2017-01-10]
- HUAWEI ET AL: "Solutions for collisions of MA signatures", 3GPP DRAFT; R1-1608860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051148914, Retrieved from the Internet: URL:http://www.3gpp.org/ftp/Meetings_3GPP_ SYNC/RAN1/Docs/ [retrieved on 2016-10-09]
- INTERDIGITAL COMMUNICATIONS: "On the Operation of Grant-Free Access", 3GPP DRAFT; R1-1612685 ON THE OPERATION OF GRANT-FREE ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051176628, Retrieved from the Internet: URL:http://www.3gpp.org/ftp/Meetings_3GPP_ SYNC/RAN1/Docs/ [retrieved on 2016-11-13]
- HUAWEI: 'HARQ process selection for UL asynchronous HARQ' 3GPP TSG-RAN WG2 MEETING #94 R2-163958 27 May 2016, XP051095316
- HUAWEI: 'Solutions for collisions of MA signatures' 3GPP TSG RAN WG1 MEETING #86BIS R1-1608860 14 October 2016, XP051148914
- HUAWEI: 'Resource allocation and management for grant-free UL' 3GPP TSG RAN WG1 MEETING #86BIS R1-1608861 14 October 2016, XP051148915

## Description

### TECHNICAL FIELD

The present disclosure relates to the communications field and, for example, to a data retransmission method and apparatus.

### BACKGROUND

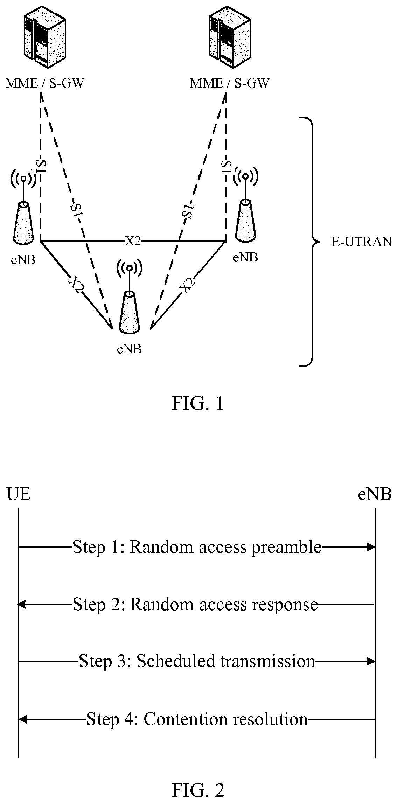

A Long Term Evolution (LTE) network includes an Evolved Universal Terrestrial Radio Access Network (E-UTRAN) and a Core Network (CN). The E-UTRAN includes an evolved Node B (eNB). The CN includes a mobile management entity (MME) and a serving gateway (S-GW). The eNB is connected to the CN through an S1 interface and the eNBs are connected to each other through an X2 interface. One eNB may manage one or more cells. The interface between a User Equipment (UE) or terminal and a cell is referred to as a Uu interface (air interface). FIG. 1 is a schematic diagram of a network architecture of an LTE system in the related art, and the network architecture in the related art is shown in FIG. 1.

In the current LTE system, according to the current protocol, if a terminal communicates with a base station, the terminal needs to access the base station, that is, the terminal needs to initiate a random access process. FIG. 2 is a schematic diagram of a four-step random access process of the LTE system in the related art. As shown in FIG. 2, the contention-based random access process includes the following four steps.

In step 1, the terminal acquires, through system information or Radio Resource Control (RRC) signaling, available preamble sequence codes for random access and time-frequency positions for transmitting the preamble sequences, then randomly selects the preamble sequence and the time-frequency position for transmitting the preamble sequence from the available resources, and then transmits the randomly selected preamble sequence and time-frequency position to the base station.

In step 2, the base station deduces, according to the time-frequency position used by the random access preamble sequence, a Routing Area Radio Network Temporary Identifier (RA-RNTI) possibly adopted by the terminal, and decodes the preamble sequence by using the RA-RNTI. After successfully decoding the preamble sequence, the base station replies with a random access response to the terminal and the response carries information such as uplink grant and the like.

In step 3, the terminal transmits uplink data on the uplink granted resource, and the uplink data carries information such as an identifier of the terminal.

In step 4, the base station parses the uplink data on the uplink granted resources, identifies the terminal, resolves the conflict, and sends a contention resolution identification to the terminal.

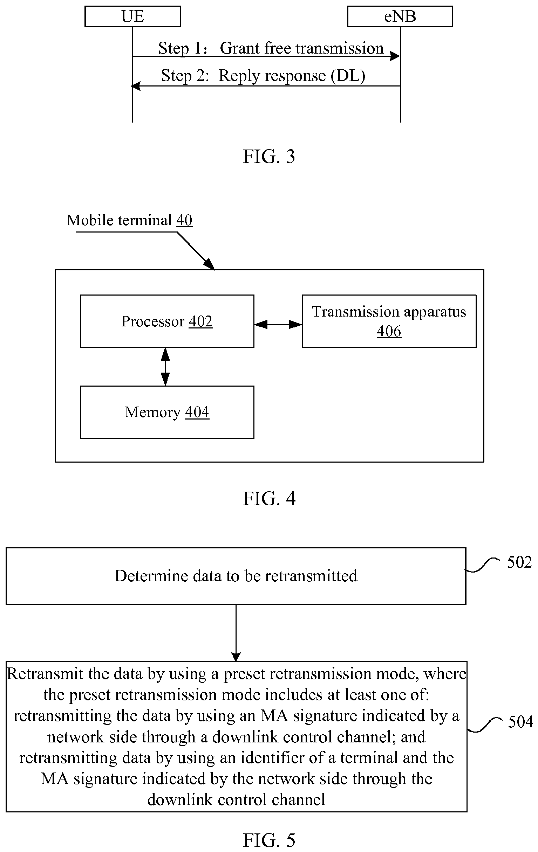

As can be seen from the above, it takes a long time for the terminal to access the network. Therefore, there is a demand for low latency requirement of traffic, the simplification of the random access process also receives a growing attention. Especially, the non-orthogonal multiple access technology is recognized, and the simplification of the random access process becomes a technical point to be solved. A current direction of the random process is to simplify the step 2 of the random access process. The terminal may send data to the base station in a grant free case. FIG. 3 is a schematic diagram of a two-step random access process (grant free random access) of the LTE system in the related art. As shown in FIG. 3, the two-step random access may include the following two steps.

In step 1, the terminal selects a resource in a grant free resource pool and sends uplink data.

In step 2, the base station parses the data and replies with a response (if data from multiple terminals conflict, the base station needs to perform contention resolution).

In addition, the LTE system currently has multiple technologies for reducing signaling overhead, for example, a lighted Connected UE technology which is in a standardization process in R14 and an inactive state research of 5G. When the terminal has no data transmission, the terminal and the network side equipment can keep a 'lighted' connection state or an inactive state. For example, in the inactive state technology, the connection between the terminal and the network side equipment is broken, and the connection between the base station and the core network is always maintained. When the terminal in the inactive state has data to be transmitted, the connection between the terminal and the network side equipment needs to be reestablished.

The above-mentioned two-step random access process is also applicable to the UE in the inactive state, however, when the terminal in the inactive state directly sends data in the two-step random access process, the terminal does not have its own identification information and the terminal derives the RA-RNTI (temporary identifier used by the UE when initiating the random access process in the LTE system) or other identifier according to the time-frequency resource selected by the terminal itself as the identification information of the UE to initiate the random access process (similar to the current LTE system, the network side may need the identification information to scramble the response message). Since different terminals may select the same time-frequency resource, the calculated RA-RNTIs may also be in conflict.

The related art has the problem of retransmission when the terminal in the inactive state transmits data in the grant free random process. In addition, since the data transmission uses the time-frequency resources in a common resource pool, resource conflict may occur between different terminals, and especially in the case where the time-frequency resources selected by different terminals for data transmission are in conflict, the retransmission problem becomes more complicated. Further relevant technology is also known from HTC: "HARQ retransmission in grant-free NOMA", 3GPP DRAFT, R1-1701009, XP 051203299, 10 January 2017 (2017-01-10).

### SUMMARY

The disclosure provides a data retransmission method and apparatus to at least solve a problem in the related art that a data retransmission conflict rate is large when a terminal retransmits data.

Further provided is a computer program product. The computer program product includes a computer program stored in a non-transient computer-readable storage medium. The computer program includes program instructions that, when executed by a computer, enables the computer to execute any method described above.

According to the present disclosure, after determining the data to be retransmitted, the terminal retransmits the data in the preset retransmission mode, so that the problem of high conflict rate of the data retransmission when the terminal retransmits the data in the related art can be solved, and the effect of reducing the data retransmission conflict rate is achieved.

The invention is carried out in accordance with the appended claims.

### BRIEF DESCRIPTION OF DRAWINGS

FIG. 1 is a schematic diagram of a network architecture of an LTE system in the related art;
FIG. 2 is a schematic diagram of a four-step random access process of the LTE system in the related art;
FIG. 3 is a schematic diagram of a two-step random access process of the LTE system in the related art;
FIG. 4 is a block diagram of a hardware configuration of a mobile terminal of a data retransmission method of the present embodiment;
FIG. 5 is a flowchart (1) of the data retransmission method according to an embodiment of the present disclosure;
FIG. 6 is a diagram showing an uplink HARQ timing relationship of an LTE FDD system;
FIG. 7 is a schematic diagram of an RLC layer AM mode of the LTE system;
FIG. 8 is a flowchart (2) of the data retransmission method according to an embodiment of the present disclosure;
FIG. 9 is a block diagram (1) of a data transmission apparatus according to an embodiment of the present disclosure;
FIG. 10 is a block diagram of a structure of a determination module 92 of the data transmission apparatus of the present embodiment;
FIG. 11 is a block diagram (2) of the data transmission apparatus according to an embodiment of the present disclosure; and
FIG. 12 is a schematic diagram of a hardware configuration of a network device of the present embodiment.

### DETAILED DESCRIPTION

The present disclosure will be described hereinafter in detail with reference to the drawings and in conjunction with embodiments. The terms "first", "second" and the like in the description, claims and above drawings of the present disclosure are used to distinguish between similar objects and are not necessarily used to describe a particular order or sequence.

A method embodiment provided in this embodiment may be executed in a mobile terminal, a computer terminal or other similar computing apparatuses. In the following example, the method is executed in the mobile terminal. FIG. 4 is a block diagram illustrating a hardware configuration of a mobile terminal for a data retransmission method according to the present embodiment. As shown in FIG. 4, a mobile terminal 40 may include one or more (only one processor is shown in FIG. 4) processors 402 (the processor 402 may include a processing apparatus such as a microcontroller unit (MCU) and a field programmable gate array (FPGA)), a memory 404 used for storing data, and a transmission apparatus 406 used for implementing a communication function. The structure shown in FIG. 4 is only illustrative. For example, the mobile terminal 40 may further include more or fewer components than the components shown in FIG. 4 or may have a configuration different from that shown in FIG. 4.

The memory 404 may be configured to store software programs and modules of application software, such as program instructions/modules corresponding to the data retransmission method in the present embodiments. The one or more processors 402 execute the software programs and modules stored in the memory 404 to perform functional applications and data processing, that is, to implement the method described above. The memory 404 may include a high-speed random access memory, and may further include a nonvolatile memory, such as one or more magnetic storage apparatuses, flash memories or other nonvolatile solid state memories. In some examples, the memory 404 may include memories which are remotely disposed with respect to the processor 402 and these remote memories may be connected to the mobile terminal 40 via a network. Examples of the above-mentioned network include the Internet, an intranet, a local area network, a mobile communication network and a combination thereof.

The transmission apparatus 406 is configured to receive or send data via a network. Specific examples of such a network may include a radio network provided by a communication provider of the mobile terminal 40. In one example, the transmission apparatus 406 includes a network interface controller (NIC), which may be connected to other network equipment via a base station and thus communicates with the Internet. In an example, the transmission apparatus 406 may be a Radio Frequency (RF) module, which is used for communicating with the Internet in a wireless way.

The present embodiment provides a data retransmission method. FIG. 5 is a flowchart (1) of the data retransmission method according to the present embodiment. As shown in FIG. 5, the flowchart includes the following steps.

In step 502, data to be retransmitted is determined.

In step 504, data is retransmitted in a preset retransmission mode, and the preset retransmission mode includes at least one of: retransmitting the data retransmitted by using an MA signature indicated by a network side through a downlink control channel; and retransmitting the data by using an identifier of the terminal and the MA signature indicated by the network side via the downlink control channel.

According to the above-mentioned steps, the terminal retransmits the data in the preset retransmission mode after determining the data to be retransmitted, so that the problem of high conflict rate of the data retransmission when the terminal retransmits data in the related art can be solved, and the effect of reducing the data retransmission conflict rate is achieved.

Alternatively, the above steps may be executed by a terminal (e.g., a mobile phone, a computer, etc.).

In the grant free random access process, the terminal may send uplink data in a common resource pool (time frequency resources), and since the resources are limited and the terminal randomly selects the time frequency resource, conflict is likely to occur. The 3 GPP introduces the concept of the Multi-Access (MA) signature in the standard discussion, and the MA signature is a resource of a dimension other than the time-frequency resources and includes at least one of the following resources: codebook, codeword, a sequence, an interleaved and mapped pattern, a demodulation reference signal, a preamble, a spatial dimension, a power dimension, etc.. The introduction of the MA signature may relatively reduce the occurrence probability of the conflict.

In the grant free random access process, when the terminals send data using the same resource pool (the time-frequency resources), the following situations may occur.
(1) The network side can identify the identification information of the terminal and successfully parses the data of the terminal.
(2) The network side can identify the identification information of the terminal but fails to parse the data of the terminal.
(3) The network side fails to parse the data of the terminal and cannot identify the identification information of the terminal.

Therefore, when the network side fails to parse the data of the terminal, it is necessary to consider whether the terminal needs to retransmit the uplink data of the terminal and how to perform the retransmission. Taking the LTE system as an example, the retransmission is divided into a lower layer retransmission and a higher-layer retransmission. The lower layer retransmission is similar to a hybrid automatic repeat request (HARQ) retransmission of a media access control (MAC) layer or a physical layer, and the higher-layer retransmission is similar to an Automatic Repeat request (ARQ) retransmission of a Radio Link Control (RLC) protocol layer.

The retransmission techniques described above are described below.
(1) HARQ: the lower layer HARQ retransmission is generally as follows. The transmitting end receives a feedback (ACK or NACK) from the receiving end. If the transmitting end receives ACK, it indicates that the reception at the receiving end receives is successful. If the transmitting end receives NACK, it indicates that the receiving end fails to receive data and the retransmission is needed. Generally, the maximum number of retransmissions is limited. According to different retransmission sending modes, operation modes of the HARQ may be divided into a synchronous HARQ and an asynchronous HARQ. The synchronous HARQ refers to that the transmission and retransmission occurrence have a fixed timing relation in one HARQ process, so no additional signaling overhead is needed to identify the sequence number of the HARQ process and additional control signaling. The asynchronous HARQ refers to that the transmission time of the retransmission in the HARQ process needs to be indicated by additional retransmission control signaling, and the processing number of the HARQ process needs to be sent together with data, thereby increasing the signaling overhead of the system. According to whether the data characteristic changes during retransmission, the operation modes of the HARQ can be divided into two types, namely an adaptive HARQ and a non-adaptive HARQ. The data characteristic of the transmission includes allocation of resource blocks, a modulation mode, a length of a transmission block, a duration of the transmission and the like.

In the LTE system, in order to acquire a better combining gain, an Incremental Redundancy (IR) HARQ scheme is employed in the uplink or downlink. Meanwhile, the downlink of the system adopts an asynchronous adaptive HARQ technology, while the uplink adopts a synchronous HARQ scheme and supports both the adaptive mode and the non-adaptive mode. The data packet with reception error in the IR HARQ scheme is not discarded, and the receiver stores the error data packet and combines the error data packet with the subsequent retransmitted data, and then decodes the combination. Each retransmission in the LTE system includes same information bits and different incremental redundancy parity bits (there may be multiple redundancy versions). The receiving end performs soft combining on the retransmitted information, combines the new parity bits to a codeword, and then performs decoding. The retransmitted data packet has self-decoding capability, and the maximum decoding gain is acquired through a soft combining mode of the retransmitted data packet and the initially transmitted data packet.

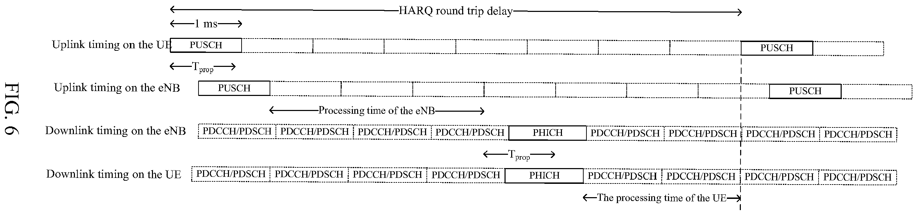

Taking a Frequency Division Duplexing (FDD) mode of the LTE system as an example, the timing relationship and a Round-Trip Time (RTT) of the HARQ are described. FIG. 6 is a diagram of the relationship of the uplink HARQ timing of the LTE FDD system.

As shown in FIG. 6, in the FDD system, since the transmission in any direction is continuous, data retransmission or transmitting of the ACK/NACK feedback signaling can always be performed in a fixed subframe, so that the minimum RTT of HARQ is fixed, which is typically 8 milliseconds. The uplink HARQ employs a synchronous mode, and the number of processes is explicitly defined as 8 (the interval between initial transmission and retransmission is 8 ms). The UE processing time is configured to be: 3 ms minus the two-way propagation delay (TRx =3 ms-2 Tp). For uplink HARQ, the eNB processing time is configured to be 3 ms. As shown in FIG. 6, the Physical Uplink Shared Channel (PUSCH) is uplink data, and the base station performs HARQ feedback (ACK/NACK) on a Physical Hybrid ARQ Indicator Channel (PHICH).

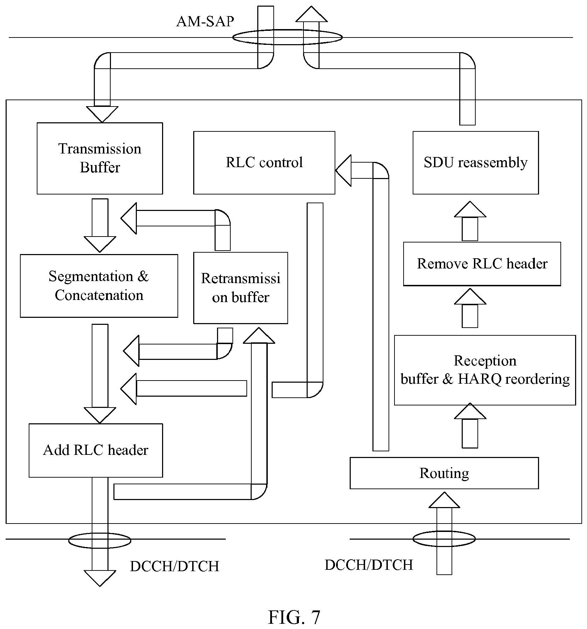

(2) ARQ (RLC layer): the RLC layer of the LTE system has three types of entities, namely a Transparent Mode (TM), a Unacknowledged Mode (UM), and an Acknowledged Mode (AM), and only the AM Mode has retransmission. FIG. 7 is a schematic diagram of the AM Mode of the RLC layer of the LTE system. As shown in FIG. 7, for the RLC layer retransmission, generally the receiving end is required to send a status report (similar to the ACK/NACK) when some statistics are reached, or the terminal actively requests the receiving end to send the status report, that is, the terminal transmits the data packet along with a field explicitly instructing the receiving end to feed back (polling mechanism); and the receiving end can also trigger the status report and send the status report when detecting data loss.

The terminal uses the polling to request the network side to send the status report in the following cases.
(1) The transmission reaches a certain number of AMD PDUs.
(2) The transmission reaches a certain number of AMD bytes.
(3) The transmission buffer is empty except for the RLC Data PDU that has been transmitted and is waiting for acknowledgement.
(4) The RLC Data PDU cannot be further transmitted due to transmission window blocking or the like.
(5) A timer expires, etc..

The status report is generally transmitted via a traffic channel (PDSCH) scheduled by a control channel (PDCCH), the PDCCH needs an agreed UE addressing mode (e.g., C-RNTI, etc.), and the PDSCH needs to carry the identification information of the UE.

In an alternative embodiment, the terminal sends uplink data to the network side, and receives feedback from the network side for the uplink transmitted data. The terminal transmitting the uplink data may be one or more terminals transmitting uplink data on the same time-frequency resource.

In an alternative embodiment, the preset retransmission mode further includes at least one of: random retransmission of the data performed according to the back-off time; retransmission of the data at a resource position specified by the network side; retransmission performed according to an indication sent by the network side through the downlink control channel, where the indication includes the ACK or the NACK; retransmission of the data at a resource position determined according to a preset algorithm; and retransmission of the data at a randomly selected resource position.

In the present embodiment, the random retransmission of the data according to the back-off time is retransmitting the data at a time randomly selected from a certain time range. Different terminals having conflict perform random data retransmission within a time window to reduce the conflict probability in the data retransmission. The parameter of the time window in which the terminals perform data retransmission may be determined by an agreement (for example, parameter indication in broadcast) of the terminal and the network side, or may be determined by an indication from the network side through the PDCCH.

In an alternative embodiment, determining the data to be retransmitted may include: determining the data to be retransmitted according to an indication sent by the network side through the downlink control channel, where the indication includes the ACK or the NACK. In the present embodiment, the data to be retransmitted is determined by the terminal according to the indication of the network side.

In an alternative embodiment, the downlink control channel includes the PDCCH or the PHICH; and the indication is scrambled by using the preset radio network temporary identifier.

In the present embodiment, the preset radio network temporary identifier may be a routing area radio network temporary identifier (RA-RNTI) or the like. A terminal may transmit different data. When the network side sends feedback for the data transmissions, the network side needs to add the identification information (such as RA-RNTI) of the terminal in the feedback, that is, to perform RA-RNTI scrambling for the terminal, so as to facilitate the terminal to retransmit the data.

In an alternative embodiment, the indication is acquired in at least one of the following manners: acquiring the indication through the above MA signature; and acquiring the indication according to the above initial identification information of the data.

In an alternative embodiment, determining the data to be retransmitted according to the ACK sent by the network side through the downlink control channel may include: monitoring a contention resolution ID from the network side at a preset resource position, where the preset resource is located after a resource where the ACK is received. and determining the data to be retransmitted according to the contention resolution ID or determining the data to be retransmitted according to an RLC protocol status report and the contention resolution ID.

In an alternative embodiment, the contention resolution ID may include at least one of: data bits and a higher-layer identifier. In the present embodiment, the data bits may be part of bits of the uplink data, and the higher-layer identifier is an identifier of a layer above the physical layer. Alternatively, the higher-layer ID may be a retransmission resume ID, and the conflict resolution using the resume ID requires that the terminal reports the resume ID when transmitting data, and the resume ID may be sent every time a data packet is transmitted, or the resume ID may be transmitted only once (when sent for the first time, the data is easily lost, and the resume ID is sent).

In an alternative embodiment, the random retransmission of the data according to the back-off time includes: randomly selecting the retransmission time within a preset time range; and randomly transmitting the data in the retransmission time by using a transmission parameter which was used in an initial transmission of the data.

In the present embodiment, in the retransmission of the data, the data may be randomly retransmitted in a certain back-off time, and the related parameter of the data is not changed, that is, the data is retransmitted according to the data parameter when the data is transmitted for the first time.

In an alternative embodiment, the preset time range is determined in at least one of the following manners: the preset time range is agreed with the network side; and the preset time range is indicated by the network side.

In an alternative embodiment, the method further includes: when the number of failures of retransmitting the data by using the preset retransmission mode exceeds a preset threshold value, a higher-layer retransmission of the data is performed in at least one of the following manners: triggering the RLC layer data retransmission; requesting the network side for a first status report of transmission of the data by integrally polling the data, and retransmitting the data according to the first status report; and requesting the network side for a second status report of transmission of each data packet by separately polling each data packet of the data, and retransmitting the data according to the second status report of transmission of each data packet.

In the present embodiment, when the number of the lower layer retransmissions of the data exceeds a certain threshold, the higher-layer retransmission of the data is performed, so as to reduce the conflict rate of the data retransmission.

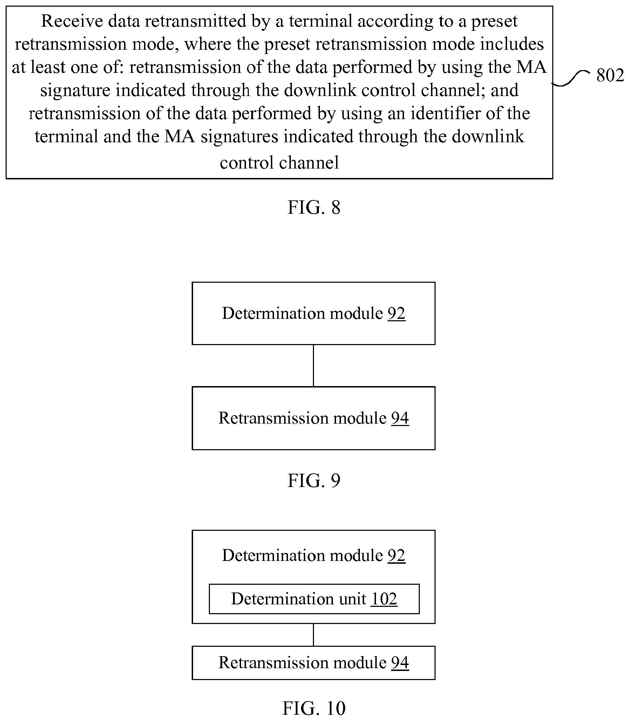

The present embodiment provides a data retransmission method. FIG. 8 is a flowchart (2) of the data retransmission method according to the present embodiment. As shown in FIG. 8, the flowchart includes the following steps.

In step 802, data retransmitted by the terminal according to the preset retransmission mode is received, and the preset retransmission mode includes at least one of: a retransmission of the data performed by using the MA signature indicated by the downlink control channel and a retransmission of the data performed by using an identifier of the terminal and the MA signature indicated by the downlink control channel.

According to the above step, the network side receives the data retransmitted by the terminal side in the preset retransmission mode, the high conflict rate problem in the data retransmission when the terminal retransmits the data in the related art can be solved, and the effect of reducing the data retransmission conflict rate is achieved.

Alternatively, the above step may be executed by the network side (e.g., the base station, etc.).

In an alternative embodiment, after receiving the data sent by the terminal, the network side parses the data and sends feedback for the data to the terminal. The feedback includes an ACK feedback or an NACK feedback.

In an alternative embodiment, the preset retransmission method further includes at least one of: random retransmission of the data performed according to the back-off time; retransmission of the data performed at the specified resource position; retransmission of the data performed according to the indication of the downlink control channel, where the indication includes the ACK or the NACK; retransmission of the data performed at the resource position determined by the terminal according to the preset algorithm; and retransmission of the data performed by the terminal at a randomly selected resource position.

In an alternative embodiment, before receiving the data retransmitted by the terminal according to the preset retransmission mode, the method further includes: sending an indication to the terminal through the downlink control channel, where the indication is used for instructing the terminal to determine the data to be retransmitted, and the indication includes the ACK or the NACK.

In an alternative embodiment, when an indication for instructing the terminal to perform retransmission or determine the data is sent to the terminal through the downlink control channel: the downlink control channel includes the PDCCH or the PHICH; and the indication is scrambled by using a preset wireless network temporary identifier.

In an alternative embodiment, when the indication is sent to the terminal through the downlink control channel, the indication may be sent in at least one of the following manners: the indication is sent through the MA signature; and the indication is sent according to the initial identification information of the data.

In an alternative embodiment, after sending the ACK to the terminal, the data retransmission method of the present embodiment further includes: sending the contention resolution ID to the terminal after the resource where the ACK is sent.

In an alternative embodiment, the contention resolution ID may include at least one of: data bits and the higher-layer identifier.

In an alternative embodiment, the process of retransmitting the data according to the back-off time includes: randomly selecting by the terminal the retransmission time within a preset time range and randomly retransmitting the data in the retransmission time by using a transmission parameter which is used in the initial transmission of the data.

In an alternative embodiment, the preset time range may be determined in at least one of the following manners: the preset time range is agreed with the terminal; and the preset time range is indicated to the terminal.

In an alternative embodiment, the method further includes: when the number of failures of retransmitting the data by using the preset retransmission mode exceeds a preset threshold value, a higher-layer retransmission of the data is performed in at least one of the following manners: receiving the data retransmitted by the terminal after the terminal triggers a RLC layer data transmission; receiving a request from the terminal for integrally polling the data; sending a first status report to the terminal according to the request for the integrally polling; and receiving the data retransmitted by the terminal according to the first status report; and receiving a request from the terminal for polling each data packet of the data; respectively sending a second status report for each data packet to the terminal according to each polling request; and receiving the data retransmitted by the terminal according to the second status report.

In an alternative embodiment, before receiving the data retransmitted by the terminal according to the preset retransmission method, the method may further include: indicating a specified resource position to the terminal.

The present disclosure will be described below in conjunction with the embodiments.

### Embodiment 1

Case 1: different terminals can be distinguished through MA signatures, that is, MA signatures of different terminals do not conflict with a HARQ process. The following data interaction between the terminal and a network side includes the following steps.

In step 1, the terminal transmits uplink data. When the terminal transmits data, one, two or multiple terminals may send uplink data on an identical time-frequency resource.

In step 2, the network side returns feedback for the received data, the feedback of the network side includes the following cases.
(1) The network side does not send feedback since the network side fails to detect the data.
(2) The network side may detect data sent by all or part of the terminals, and all or part of the data sent by the terminals is successfully parsed. The network side sends ACK to the terminal which is successfully identified whose data is successfully parsed. The network side sends NACK to the terminal which is successfully identified but whose data is not successfully parsed. If all terminals transmit data on the identical time-frequency resource (conflict), different terminals can be distinguished via the MA Signatures, and the feedbacks transmitted by the network side to the different terminals can also be distinguished via the MA Signatures and the identification information (such as RA-RNTI) of the terminals. In order to reduce the conflict probability of retransmission, the network side may indicate the resource position for retransmission to the terminal while feeding back the NACK, such as another common resource pool or a specific resource set.

In step 3, the terminal receives the feedback from the network side. The terminal side can acquire the feedback for the terminal side from the network side via the MA Signature and the initial identification information, and there may be the following actions. If the terminal does not receive feedback, two understandings are possible. One is the terminal considers that the base station does not send the feedback. The other is the terminal considers that the base station sent the feedback but the feedback is lost. Although there are two understandings, the possible processing manner of the terminal side is to transmit data again, which is performed in accordance with the retransmission process.

If the terminal receives the ACK, the corresponding terminal needs to do nothing (if the terminal further has data to transmitted, the terminal proceeds to transmit data). If the terminal receives the NACK, the corresponding terminal performs retransmission with the HARQ RV version unchanged. If the terminal performs HARQ retransmission, there are the following retransmission modes.
(1) The retransmission is performed in the original common resource pool and using the same mode (e.g., the same MA Signature, RNTI, modulation and coding scheme (MCS), etc.) as the initial transmission. The probability of retransmission conflict in this case is still relatively large.
(2) The retransmission is performed randomly with a certain back-off time, and the related parameters are not changed, so that the conflict probability is correspondingly reduced.
(3) If the network side identifies the terminal, the network side may designate a specific resource position for retransmission (the conflict is completely avoided in this mode), or the terminal is allowed to randomly select the resource position according to an algorithm. The back-off time means randomly selecting a time for retransmission within a certain time range, that is, different terminals in conflict randomly perform retransmissions in a time window, which further reduce the conflict probability. The time window parameter for the retransmission of the terminal may be obtained in the following manners; the time window parameter is pre-agreed (for example, a parameter indication in a broadcast), the time window parameter is indicated by the network side through the PDCCH, and the like.

Case 2: MA Signatures of different terminals conflict or the MA Signature is not adopted to distinguish the terminals, and the process of the lower layer HARQ transmission is as follows.

In step 1, the terminal transmits uplink data. In this situation, one, two or more terminals may transmit uplink data on the same time-frequency resource, the terminal may transmit only one data packet or may transmit multiple data packets.

In step two, the network side returns feedback for the received data. The feedback from the network side includes the following cases.
(1) The network side fails to detect the data so the network side does not send feedback.
(2) The network side can detect the terminal (since the MA Signature and the like are not adopted for distinguishing different terminals, the network side can only detect data transmissions from the terminals, but does not know the number of the terminals, that is, the network side may consider that there is only one terminal) and successfully parse the data of the terminal (also be considered as one), and then the network side sends ACK. It should be noted that all terminals sending data at this time-frequency resource may receive the ACK, but only the data of one terminal is actually successfully parsed. Since the physical layer of the network side cannot perform contention resolution in this case, the network side needs to send a contention resolution ID to further perform contention resolution. The contention resolution ID adopts data bits (using a part of uplink data information bit of the terminal) or a higher-layer ID. The higher-layer ID may be a resume ID, and the conflict resolution by using the resume ID requires that the terminal reports the resume ID when transmitting data. The resume ID may be transmitted every time a data packet is transmitted, or the resume ID may be transmitted only once (the data is easily lost in the first transmission).

The network side can detect the terminal (since the MA Signature and the like are not adopted for distinguishing different terminals, the network side can only detect data transmissions from the terminals, but does not know the number of the terminals, that is, the network side may consider that there is only one terminal), but cannot successfully parse the data of the terminals, the network side sends the NACK. It should be noted that all terminals sending data at this time-frequency resource may receive the NACK in this case. In order to reduce the conflict probability, for enhancement, the network side may further adopt the PDCCH for indicating the corresponding terminal for retransmission (actually equivalent to the initial transmission), so that the terminal may adopt some strategies such as randomization to reduce the conflict.

In step 3, the terminal receives the feedback from the network side, and the terminal side may have the following actions according to the feedback from the network side.

1. If the terminal does not receive the feedback, two understandings are possible. One understanding is that the terminal considers that the base station does not send the feedback. The other understanding is that the terminal considers that the base station sends the feedback but the feedback is lost.

Although there are two understandings, the possible processing manner of the terminal side is to transmit the data again, which is performed in accordance with the retransmission manner.

2. If the network side sends the ACK, all terminals sending data on the same time-frequency resource will receive the ACK. If the data is successfully parsed, the terminal does not need to perform any further processing (the terminal proceeds to transmit other data). However, in this case, the terminal whose data is not successfully parsed also receives the ACK, therefore the terminal may misunderstand that its own data successfully parsed by the network side. If the terminal does not do anything for this, a problem (a RLC layer may find a packet loss) occurs. For this case, after receiving the ACK, each of the terminals monitors the contention resolution ID of a message 2 at a certain subsequent resource position (using the data bit itself or the resume ID of the higher-layer) and further determines, in combination with the status report of the RLC layer, whether its own data is successfully parsed. The higher-layer ID may be the resume ID, the conflict resolution by using the resume ID requires that the terminal reports the resume ID when sending data. The resume ID may be sent every time the data packet is sent, or the resume ID may be sent only once (the data is easily lost in its first transmission). For the case where the terminal transmits multiple data packets, it is necessary for the terminal to detect its contention resolution ID and RLC status report each time.

3. If the network side sends the NACK, all terminals transmitting data on the same time-frequency resource will receive the NACK. There are two processing manners for this case.
(1) Two UEs each continue to perform retransmission with the same parameter as used in the initial transmission (the network receiving side can perform combining decoding, but the retransmission success rate is not high).
(2) The terminal side performs the randomized retransmission. The randomization method is similar to the above mentioned method, and the randomization time can be appointed by the protocol, such as acquiring the randomization time during the broadcast; or the randomization time is indicated through the PDCCH to the corresponding terminal to perform retransmission (actually equivalent to the initial transmission). The randomization time may be indicated through the PDCCH to the corresponding terminal by relying on the contention resolution ID (data bit or higher-layer resume ID) and the like. In the back-off time scheme, the retransmission is performed at a time randomly selected from a certain time range, that is, the conflict probability is reduced due to the random retransmissions of different terminals in the time window. In some abnormal cases, when the terminal side receives the feedback from the network side, the terminal side may mistake ACK as NACK or mistake NACK as ACK, and the like, which are similar to those in the current LTE system. For a terminal behavior, the terminal may perform a corresponding behavior according to its understanding.

The RLC layer ARQ process in the grant free random access process of the terminal in the inactivated state.

The above description mainly addresses the problem of how to perform the lower layer HARQ retransmission when different terminals conflict on the same time-frequency resource. When the lower layer HARQ retransmission still fails to meet a Quality of Service (QoS) requirement of the traffic, or when the higher-layer retransmission is configured, the higher-layer retransmission needs to be further considered. For the terminal in the inactive state, the three status report triggering methods considered in the introduction of the Background need to be considered in the grant free random access process.

The status report generally is transmitted via a traffic channel (PDSCH) scheduled by a control channel (PDCCH), the PDCCH needs an agreed UE addressing mode (e.g., the RA-RNTI, since the terminal in the inactive state does not have a C-RNTI and its RA-RNTI is not unique, a conflict situation may exist), and the PDSCH needs to carry UE's contention resolution ID (i.e. data bit mode or higher-layer ID mode).

Higher-layer retransmission (RLC layer retransmission) methods are given below.

In method 1, after the lower layer HARQ retransmission fails for several times, the terminal triggers the RLC layer retransmission by itself.

In method 2, the terminal requests the network side to send the status report using the polling. The method 2 includes the following situations.
(1) a certain number of AMD bytes have been transmitted.
(2) The transmission buffer except for the RLC Data PDU that has been transmitted and is waiting for acknowledgement is empty .
(3) The RLC Data PDU cannot be further transmitted due to transmission window blocking or the like.
(4) A timer expires.
(5) A certain number of AMD PDUs have been sent.

The above-mentioned polling mechanisms of the LTE can be adopted, and relevant parameters can be updated.

In method 3, certain enhancement is adopted. Since the higher layer assistance may be needed for the conflict resolution at any time, a situation that the terminal side actively triggers the polling is added, and the polling is performed every time one data packet is sent.

In summary, the problem of the retransmission, including the lower layer retransmission and the higher-layer retransmission, when the terminal in the inactive state transmits data in the grant free random access process is solved.

### Embodiment 2

Different terminals may be distinguished through MA Signatures, that is, the MA Signatures of different terminals do not conflict with each other. The following cases may occur when the terminals each transmit a single data packet.

A lower layer retransmission (HARQ) may include the steps described below.

In step 1, both a terminal UE_1 and a terminal UE_2 transmit uplink data, which correspond to a PUSCH_1 and a PUSCH_2, respectively.

In step 2, a network side fails to detect the data and does not send feedback.

In step 3, if the terminals do not receive the feedback, there are two possibilities: (1) the base station does not send the feedback; (2) the base station sends the feedback but the feedback is lost.

Although there are two possibilities, the possible processing manner of the terminal side is to transmit the data again, which is performed in accordance with the retransmission.

Higher-layer retransmission (ARQ) methods are as follows.

In method 1, after the lower layer HARQ retransmission fails for several times, the terminal triggers the RLC layer retransmission (suitable for the lower layer retransmission) by itself.

In method 2, the terminal requests the network side to send the status report through polling, which includes several situations.
(1) A certain number of AMD PDUs have been transmitted.
(2) A certain number of AMD have been transmitted.
(3) The transmission buffer except for the RLC Data PDU that has been transmitted and is waiting for acknowledgement is empty.
(4) The RLC Data PDU cannot be further transmitted due to transmission window blocking or the like.
(5) A timer expires.

The above-mentioned polling mechanisms of the LTE are still usable, and relevant parameters can be updated.

In method 3, certain enhancement is adopted. Since the higher layer assistance may be needed for the conflict resolution at any time, a situation that the terminal side actively triggers the polling is added.

### Embodiment 3

Different terminals can be distinguished through MA Signatures, that is, MA Signatures of different terminals do not conflict with each other, and the terminals each transmit a single data packet.

The lower layer retransmission (HARQ) may include the steps described below.

In step 1, both a terminal UE_1 and a terminal UE_2 send uplink data, which correspond to a PUSCH_1 and a PUSCH 2, respectively.

In step 2, a network side can detect the UE_1 and UE_2, and performs parsing successfully on the PUSCH_1 and PUSCH 2, then the network side sends ACK to the UE_1 and UE_2 (which are distinguished by the MA Signatures).

In step 3, the terminal receiving the ACK does not need to do anything. If the terminal does not receive the feedback (the feedback may be lost), the terminal may have two understandings: the base station does not send the feedback or the base station sends feedback but the feedback is lost. Although there are two understandings, the possible processing manner of the terminal side is to transmit data again, which is performed in accordance with the retransmission.

If the terminal performs HARQ retransmission, there exist the following retransmission modes for.

The retransmission is performed in the original common resource pool and using the same manner (e.g., the same MA Signature, RNTI, modulation and coding scheme (MCS), etc.) as the initial transmission. The probability of retransmission conflict for this case is still relatively large.

The retransmission can be performed randomly with a certain back-off time, and the related parameters are not changed, so that the conflict probability is correspondingly reduced.

The network side may specify a resource position for retransmission (a mode avoiding conflict), or the terminal is allowed to randomly select the resource position or select the resource position according to a certain algorithm. In the back-off time scheme, the time for retransmission is randomly selected within a certain time range, that is, different terminals which are in conflict perform random retransmissions in a time window, which further reduces the conflict probability. The time window parameter used in the retransmission of the terminal may be obtained in the following manners: the time window parameter is pre-agreed(for example, a parameter indication in a broadcast), the time window parameter is indicated by the network side (a PDCCH indication) and the like.

When performing the higher-layer retransmission (ARQ), the process is same as that in Embodiment 2.

### Embodiment 4

Different terminals can be distinguished via MA Signatures, that is, the MA Signatures of different terminals do not conflict with each other. The terminals each transmit multiple data packets (e.g. 2 data packets).

In step 1, both a terminal UE_1 and a terminal UE_2 transmit uplink data, which correspond to a PUSCH_1 and a PUSCH_2, respectively, each terminal transmits two data packets.

In step 2, the network side receives the PUSCH_1 and PUSCH_2, and the following situations may occur.
(1) The network side can detect the UE_1 and/or the UE_2. All the data packets of the PUSCH_1 and/or the PUSCH_2 may be successfully parsed, or part of the data packets are successfully parsed, or all the data packets are not parsed, the network side sends an ACK to UE whose data packets are correctly parsed; and the network side sends an NACK to the UE whose data packets are not correctly parsed.
(2) The network side fails to detect the UE_1 and/or the UE_2 and the network side does not send the feedback.

In step 3, this step is the same as the step 3 in Embodiment 3.

During the higher-layer retransmission (ARQ), unlike the Embodiment 2, the terminal performs polling every time the terminal transmits one data packet.

### Embodiment 5

MA Signatures of different terminals conflict or the MA Signature is not adopted to distinguish the terminals, and the terminals each transmit one data packet.

The lower layer retransmission (HARQ) may include the steps described below.

In step 1, both a terminal UE_1 and a terminal UE_2 transmit uplink data, which are transmitted through a PUSCH_1 and a PUSCH_2, respectively.

In step 2, a network side fails to detect the data and does not send the feedback.

In step 3, the terminals do not receive feedback, and may have the following two possible understandings.
(1) The base station does not send the feedback.
(2) The base station sends the feedback, but the feedback is lost.

Although there are two possible understandings, the possible processing manner of the terminal side is to transmit the data again, which is performed in accordance with the retransmission.

If the higher-layer retransmission (ARQ) is supported, the process is same as that in the above Embodiment 2.

### Embodiment 6

MA Signatures of different terminals conflict or the MA Signature scheme is not adopted to distinguish the terminals, and the terminals each transmit one data packet.

The lower layer retransmission (HARQ) may include steps described below.

In step 1, both a terminal UE_1 and a terminal UE_2 transmit uplink data, which correspond to a PUSCH_1 and a PUSCH_2, respectively.

In step 2, the network side detects data transmitted from the terminal., Since different terminals cannot be identified (MA Signature conflicts or no MA Signature), the network side can only know that the terminal has transmitted data, but does not know the number of the terminal, that is, the network side may consider that the data is transmitted by one terminal. The network side successfully parses the data (such as PUSCH_1) of the terminal, and thus sends ACK. It should be noted that, in this case, both the terminal UE_1 and the terminal UE_2 may receive the ACK, but actually only the data of UE_1 is successfully parsed.

Since a physical layer of the network side cannot perform contention resolution in this case, the network side needs to send a contention resolution ID for further contention resolution.

The contention resolution ID adopts data bits (using a part of the uplink data information bit from the termal) or a higher-layer ID.

The higher-layer ID may be a resume ID, and the conflict resolution by using the resume ID requires the terminal to report the resume ID when transmitting the data.

In step 3, if the network side sends ACK, both the UE_1 and UE_2 will receive the ACK. Normally, the UE_1 does not perform any processing in this case, but the UE_2 also receives the ACK, so the UE_2 has misunderstanding. If the UE_2 does not perform any processing, there may be a problem (the RLC layer may find a packet loss). For this situation, after receiving the ACK, each of the UE_1 and the UE_2 goes on to monitor the contention resolution ID of a message 2 at a certain subsequent resource position and determine, in combination with the status report of the RLC layer, whether its own data is successfully parsed or not.

If the higher-layer retransmission (ARQ) is supported, the process is the same as that in the Embodiment 2.

### Embodiment 7

MA Signatures of different terminals conflict or the MA Signature scheme is not adopted to distinguish the terminals, and the terminals each transmit one data packet.

The lower layer transport retransmission (HARQ) may include steps described below.

In step 1, both a terminal UE_1 and a terminal UE_2 transmit uplink data, which correspond to a PUSCH_1 and a PUSCH_2, respectively.

In step 2, the network side can detect the terminal (since different terminals cannot be distinguished by, for example, the MA Signature, the network side may only know that there is some terminals transmit data but does not know the number of the terminals, that is, the network side considers that the data is transmitted from one terminal), but fail to parse the data of the terminals (for example, the network side considers that the PUSCH_1 of UE_1 is not parsed successfully), so the network side sends the NACK. It should be noted that all terminals transmitting data at this time-frequency resource may receive the NACK in this case. In order to reduce the conflict probability, the network side may instruct, through the PDCCH for further enhancement, the corresponding terminal to transmit the data again (actually equivalent to the initial transmission), so that the terminals may adopt some strategies such as randomization to reduce the conflict.

In step 3, if the network side sends the NACK, all terminals transmitting data on the same time-frequency resource will receive the NACK. Two processing manners may be used in this case.
(1) Two UEs each retransmit the data with the same parameters (the network receiving side may perform combining decoding, but the success rate of the retransmission is not high).
(2) The terminal side performs the randomized retransmission. The randomization method is similar to the above mentioned method, and the randomization time BI may be appointed by the protocol, for example, the randomization time is acquired from the broadcast. Alternatively, the randomization time is indicated to the corresponding terminal through the PDCCH for retransmission (which actually is equivalent to the initial transmission). The terminal randomly selects a time within the time range BI for retransmission, that is, different terminals which are in conflict perform random retransmissions in the time window, which further reduces the conflict probability. The contention resolution ID (data bits or higher-layer resume ID) and the like, on which the corresponding terminal may rely, are indicated to the corresponding terminal through the PDCCH.

If the higher-layer retransmission (ARQ) is supported, the same process is same as that in the Embodiment 2.

### Embodiment 8

MA Signatures of different terminals conflict or the MA Signature scheme is not adopted to distinguish the terminals, and the terminals each transmit multiple data packets (e.g. 2 data packets).

In step 1, both a terminal UE_1 and a terminal UE_2 transmit uplink data, which correspond to a PUSCH_1 and a PUSCH_2, respectively, and each terminal transmits two data packets.

In step 2, the network side receives the PUSCH_1 and PUSCH_2, and the following situations may occur.
(1) The network side can detect the UE_1 and/or UE_2. All the data packets of the PUSCH_1 and/or PUSCH_2 are successfully parsed, or part of the data packets are successfully parsed, or none of the data packets is successfully parsed. The network side sends an ACK to the UE whose data packets are correctly parsed; and the network side sends an NACK to the UE whose data packets are not correctly parsed.
(2) The network side fails to detect the UE_1 and/or UE_2 and the network side does not send the feedback.

In step 3, this step is the same as the step 3 in Embodiment 3.

If the higher-layer retransmission (ARQ) is supported, unlike the Embodiment 2, the terminal performs polling every time one data packet is transmitted by the terminal.

The methods in the embodiments described above may be implemented by software plus a necessary general-purpose hardware platform, or may be implemented by hardware. The present disclosure may be embodied in the form of a software product. The computer software product is stored in a storage medium (such as a read only memory (ROM)/random access memory (RAM), a magnetic disk or an optical disk) and includes several instructions for enabling a terminal (which may be a mobile phone, a computer, a server, network equipment or the like) to execute the methods in the present embodiment.

The present embodiment further provides a data retransmission apparatus for implementing the above embodiments and preferred implementation modes. As used below, the term "module" may be software, hardware or a combination thereof capable of implementing predetermined functions.

FIG. 9 is a block diagram (1) of a data transmission apparatus according to the present embodiment. As shown in FIG. 9, the apparatus includes: a determination module 92 and a retransmission module 94.

The determination module 92 is configured to determine data to be retransmitted. The retransmission module 94 is connected to the determination module 92 and configured to retransmit the data in the preset retransmission mode. The preset retransmission mode includes at least one of: retransmitting the data by using the MA signature indicated by the network side via the downlink control channel; and retransmitting the data by using the identifier of the terminal and the MA signature indicated by the network side via the downlink control channel.

In an alternative embodiment, the preset retransmission mode further includes at least one of: random retransmission of the data performed according to a back-off time; retransmission of the data performed at the resource position specified by the network side; retransmission performed according to the indication sent by the network side via the downlink control channel, where the indication includes the ACK or the NACK; retransmission of the data performed at the resource position determined according to the preset algorithm; and retransmission of the data performed at a randomly selected resource position.

In an alternative embodiment, FIG. 10 is a block diagram of the determination module 92 of the data transmission apparatus according to the present embodiment. As shown in FIG. 10, the determination module 92 includes: a determination unit 102.

The determination unit 102 is configured to determine the data to be retransmitted according to an indication sent by the network side via the downlink control channel, where the indication includes the ACK or the NACK.

In an alternative embodiment, the apparatus may further include: at least one of a trigger module and a request module. The trigger module is configured to trigger a RLC layer data retransmission upon determining that the number of failures of retransmitting the data by using the preset retransmission mode exceeds a preset threshold value. Upon determining that the number of failures of retransmitting the data by using the preset retransmission mode exceeds a preset threshold value, the request module is configured to request the network side for a first status report of the data transmission by means of integrally polling the data, and retransmit the data according to the first status report; and the request module is configured to, by means of polling each data packet in the data respectively, request the network side for a second status report of transmission of each data packet, and retransmit the data according to the second status report of the transmission of each data packet

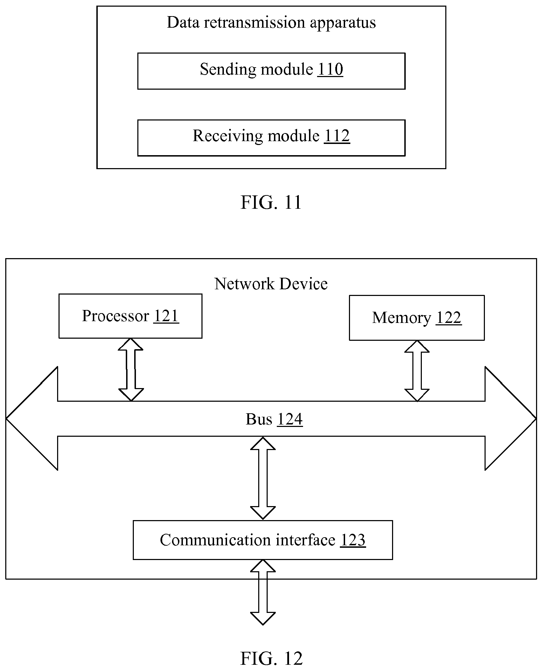

FIG. 11 is a structural block diagram (2) of a data transmission apparatus according to the present embodiment. As shown in FIG. 11, the apparatus includes a receiving module 112.

The receiving module 112 is configured to receive data retransmitted by the terminal according to the preset retransmission mode, and the preset retransmission mode includes at least one of: a retransmission of the data performed by using an MA signature indicated by a downlink control channel; and a retransmission of the data performed by using an identifier of the terminal and the MA signature indicated by the downlink control channel.

In an alternative embodiment, the preset retransmission mode may further includes at least one of: random retransmission of the data performed according to the back-off time; retransmission of the data performed at the specified resource position; retransmission performed according to the indication of the downlink control channel, where the indication includes the ACK or the NACK; retransmission of the data performed at the resource position determined by the terminal according to the preset algorithm; and retransmission of the data performed by the terminal at the randomly selected resource position.

In an alternative embodiment, the apparatus may further includes: a sending module 110, which is configured to send an indication to the terminal via the downlink control channel before a first receiving module receives the data retransmitted by the terminal according to the preset retransmission mode. The indication is used for instructing the terminal to determine the data to be retransmitted, and the indication includes the ACK or the NACK.

The receiving module 112 serves as the first receiving module in the present embodiment. In an alternative embodiment, the apparatus may further include: a second receiving module. Upon determining that the number of failures of retransmitting the data by using the preset retransmission mode exceeds a preset threshold value, the second receiving module is configured to receive data retransmitted by the terminal in a higher-layer retransmission manner in at least one of the following manners: receiving the data retransmitted by the terminal after the terminal triggers the RLC layer data transmission; receiving a request from the terminal for integrally polling the data, sending a first status report to the terminal according to the request for the integrally polling, and receiving the data retransmitted by the terminal according to the first status report; and receiving a request from the terminal for polling each data packet of the data, respectively sending a second status report for each data packet to the terminal according to each polling request, and receiving the data retransmitted by the terminal according to the second status report.

The modules described above may be implemented by software or hardware. Implementation by hardware may be performed in the following manner: the modules described above are located in a same processor or the modules described above are respectively located in different processors in any combination form.

The present embodiment further provides a storage medium. In the present embodiment, the storage medium stores computer executable instructions, and may be configured to store program codes for executing the multiple steps described above.

In the present embodiment, the storage medium may include, but is not limited to, a U disk, a read-only memory (ROM), a random access memory (RAM), a mobile hard disk, a magnetic disk, an optical disk or another medium capable of storing program codes.

In the present embodiment, a processor executes the multiple above steps according to the program codes stored in the storage medium.

The multiple modules or steps in the present embodiments described above may be implemented by a universal computing device. The modules or steps may be concentrated on a single computing device or distributed on a network composed of multiple computing devices. Optionally, the modules or steps may be implemented by program codes executable by the computing device so that the modules or steps may be stored in a storage device and executed by the computing device. In some circumstances, the illustrated or described steps may be executed in sequences different from those described herein, or the modules or steps may be made into various integrated circuit modules separately, or multiple modules or steps thereof may be implemented by means of a single integrated circuit module.

FIG. 12 is a schematic diagram of a hardware configuration of a network device of the present embodiment. As shown in FIG. 12, the network device includes a processor 121 and a memory 122, and may further include a communications interface 123 and a bus 124.

The processor 121, the memory 122 and the communications interface 123 may communicate with each other via the bus 124. The communication interface 123 may be used for information transmission. The processor 121 may execute logic instructions in the memory 122 to execute any one of methods described in the above-mentioned embodiments.

The memory 122 may include a program storage region and a data storage region. The program storage region may store an operating system and an application program required by at least one function. The data storage region may store data created according to the use of the electronic device. In addition, the memory may include, for example, a volatile memory such as a random access memory, and may also include a non-volatile memory, such as at least one disk memory, a flash memory, or other non-transient solid-state memories.

In addition, the logic instructions in the memory 122 may be implemented in the form of a software functional unit and, when sold or used as an independent product, may be stored in a computer-readable storage medium. The technical solutions provided by the present disclosure may be embodied in the form of a computer software product. The computer software product may be stored in a storage medium and includes multiple instructions for enabling a computer device (which may be a personal computer, a server, a network device, or the like) to execute all or part of the steps in the methods according to the embodiments of the present disclosure.

The storage medium may be a non-transient storage medium, or may also be a transient storage medium. The non-transient storage medium may include a U disk, a mobile hard disk, a read-only memory (ROM), a random access memory (RAM), a magnetic disk, an optical disk, or other medium capable of storing program codes.

All or part of the processes in the methods according to the above-mentioned embodiments may be implemented by relevant hardware indicated by computer programs, which may be stored in a non-transient computer-readable storage medium. During these programs are executed, the processes in the methods according to the above-mentioned embodiments may be implemented.

### INDUSTRIAL APPLICABILITY

According to the data retransmission method and apparatus of the present disclosure, the invention is carried out in accordance with the appended claims.

Therefore, the problem that the data retransmission conflict rate is high when the terminals retransmit data in the related art can be solved, and the effect of reducing the data retransmission conflict rate is achieved.

## Claims

1. A data retransmission method, comprising:
determining (502) data to be retransmitted;
retransmitting (504) the data using a preset retransmission mode, wherein the preset retransmission mode comprises at least one of: retransmitting the data by using a Multi-Access signature, MA signature, indicated by a network side through a downlink control channel; and retransmitting the data by using an identifier, ID, of a terminal and the MA signature indicated by the network side through the downlink control channel;
wherein determining (502) the data to be retransmitted comprises: determining the data to be retransmitted according to an indication sent by the network side through the downlink control channel, wherein the indication comprises an ACK or an NACK; and
**characterized in that**,
determining the data to be retransmitted according to the ACK sent by the network side through the downlink control channel comprises:
monitoring, at a preset resource position, a contention resolution ID from the network side, wherein the preset resource position is located after a resource where the ACK is received; and
determining the data to be retransmitted according to the contention resolution ID or determining the data to be retransmitted according to the contention resolution ID and a Radio Link layer Control protocol, RLC, status report.

2. The method of claim 1, wherein the preset retransmission mode comprises at least one of:
randomly retransmitting the data according to a back-off time;
retransmitting the data at a resource position specified by the network side;
retransmitting the data according to an indication sent by the network side through the downlink control channel, wherein the indication comprises an acknowledgement, ACK, or a non-acknowledgement, NACK;
retransmitting the data at a resource position determined according to a preset algorithm; and
retransmitting the data at a randomly selected resource position.

3. The method of claim 1 or 2, wherein the downlink control channel comprises a Physical Downlink Control Channel, PDCCH, or a Physical Hybrid Automatic Repeat Request Indicator Channel, PHICH; and the indication is scrambled through a preset radio network temporary identifier.

4. The method of claim 1 or 2, wherein the indication is acquired by at least one of the following manners:
acquiring the indication through the MA signature; and
acquiring the indication according to initial identification information of the data.

5. The method of claim 1, wherein the contention resolution ID comprises at least one of:
data bits; and
a higher-layer identifier.

6. The method of claim 2, wherein randomly retransmitting the data according to the back-off time comprises:
randomly selecting a retransmission time within a preset time range; and
randomly retransmitting the data in the retransmission time by using a transmission parameter which was used in an initial transmission of the data.

7. The method of claim 6, wherein the preset time range is determined in at least one of following manners:
the preset time range is agreed with the network side; and
the preset time range is indicated by the network side.

8. The method of claim 1, further comprising: upon determining that a number of failures of retransmitting the data in the preset retransmission mode exceeds a preset threshold value, performing higher-layer retransmission on the data in at least one of the following manners:
triggering a Radio Link layer Control protocol, RLC, layer data retransmission;
requesting the network side for a first status report of transmission of the data by integrally polling the data, and retransmitting the data according to the first status report; and
requesting the network side for a second status report of transmission of each data packet by separately polling each data packet of the data, and retransmitting the data according to the second status report of transmission of each data packet.

9. A data retransmission apparatus, comprising:
a determination module (92), configured to determine data to be retransmitted; and
a retransmission module (94), configured to retransmit the data by using a preset retransmission mode,
wherein the preset retransmission mode comprises at least one of: retransmitting the data by using a Multi-Access signature, MA signature, indicated by a network side through a downlink control channel; and retransmitting the data by using an identifier of a terminal and the MA signature indicated by the network side through the downlink control channel;
wherein the determination module comprises:
a determining unit (102), configured to determine the data to be retransmitted according to an indication sent by the network side through the downlink control channel, wherein the indication comprises an ACK or an NACK; and
**characterized in that**,
the determining unit (102) is further configured to:
monitor, at a preset resource position, a contention resolution ID from the network side, wherein the preset resource position is located after a resource where the ACK is received; and
determine the data to be retransmitted according to the contention resolution ID or determine the data to be retransmitted according to the contention resolution ID and a Radio Link layer Control protocol, RLC, status report.

10. The apparatus of claim 9, wherein the preset retransmission mode further comprises at least one of:
randomly retransmitting the data according to a back-off time;
retransmitting the data at a resource position specified by the network side;
retransmitting the data according to an indication sent by the network side through the downlink control channel, wherein the indication comprises an ACK or an NACK;
retransmitting the data according to a resource position determined by a preset algorithm; and
retransmitting the data at a randomly selected resource position.

11. A computer-readable storage medium, storing computer-executable instructions, wherein the computer-executable instructions when executed on a computer carry out the method of any one of claims 1 to 8.

## Patentansprüche

1. Datenneuübertragungsverfahren, umfassend:
ein Bestimmen (502) von neuzuübertragenden Daten;
ein Neuübertragen (504) der Daten mithilfe eines voreingestellten Neuübertragungsmodus, wobei der voreingestellte Neuübertragungsmodus mindestens eines aus: Neuübertragen der Daten mittels Multi-Access-Signatur, MA-Signatur, angezeigt von einer Netzwerkseite durch einen Downlink-Steuerkanal; und Neuübertragen der Daten mittels einer Kennung, ID, eines Endgeräts und der von der Netzwerkseite durch den Downlink-Steuerkanal angezeigten MA-Signatur umfasst;
wobei das Bestimmen (502) der neu zu übertragenden Daten umfasst: Bestimmen der neuzuübertragenden Daten entsprechend einer von der Netzwerkseite durch den Downlink-Steuerkanal gesendeten Anzeige, wobei die Anzeige eine ACK oder eine NACK umfasst; und
**dadurch gekennzeichnet, dass**
Bestimmen der neuzuübertragenden Daten entsprechend der von der Netzwerkseite durch den Downlink-Steuerkanal gesendeten ACK umfasst:
Überwachen, an einer voreingestellten Ressourcenposition, einer Konfliktauflösungs-ID von der Netzwerkseite, wobei die voreingestellte Ressourcenposition nach einer Ressource lokalisiert ist, an der die ACK empfangen wird; und
Bestimmen der neuzuübertragenden Daten entsprechend der Konfliktauflösungs-ID oder ein Bestimmen der neuzuübertragenden Daten entsprechend der Konfliktauflösungs-ID und einem Radio Link Layer Control Protocol-, RLC, -Statusbericht.

2. Verfahren nach Anspruch 1, wobei der voreingestellte Neuübertragungsmodus mindestens eines umfasst aus:
Neuübertragen der Daten an einer von der Netzwerkseite spezifizierten Ressourcenposition;
Neuübertragen der Daten entsprechend einer von der Netzwerkseite durch den Downlink-Steuerkanal gesendeten Anzeige, wobei die Anzeige eine Bestätigung, ACK, oder eine Nicht-Bestätigung, NACK, umfasst;
Neuübertragen der Daten an einer gemäß einem voreingestellten Algorithmus bestimmten Ressourcenposition; und
Neuübertragen der Daten an einer zufällig ausgewählten Ressourcenposition.

3. Verfahren nach Anspruch 1 oder 2, wobei der Downlink-Steuerkanal einen physischen Downlink-Steuerkanal, PDCCH, oder einen physischen Hybrid-Automatische Wiederholungsanfrageanzeigerkanal, PHICH; umfasst und die Anzeige durch eine voreingestellte temporäre Funknetzkennung verwürfelt wird.

4. Verfahren nach Anspruch 1 oder 2, wobei die Anzeige durch mindestens eine der folgenden Weisen erworben wird:
Erwerben der Anzeige durch die MA-Signatur; und
Erwerben der Anzeige entsprechend den anfänglichen Identifikationsinformationen der Daten.

5. Verfahren nach Anspruch 1, wobei die Konfliktauflösungs-ID mindestens eines umfasst aus:
Datenbits; und
eine Kennung höherer Ebene.

6. Verfahren nach Anspruch 2, wobei ein zufälliges Neuübertragen der Daten entsprechend der Back-Off-Zeit umfasst:
ein zufälliges Auswählen einer Neuübertragungszeit innerhalb eines voreingestellten Zeitbereichs; und
zufälliges Neuübertragen der Daten in der Neuübertragungszeit durch Verwenden eines Neuübertragungsparameters, der bei einer anfänglichen Übertragung der Daten verwendet wurde.

7. Verfahren nach Anspruch 6, wobei der voreingestellte Zeitbereich durch mindestens eine der folgenden Weisen bestimmt wird:
der voreingestellte Zeitbereich wird mit der Netzwerkseite vereinbart; und
der voreingestellte Zeitbereich wird von der Netzwerkseite angezeigt.

8. Verfahren nach Anspruch 1, ferner umfassend: nach Bestimmen, dass eine Anzahl von Fehlschlägen des Neuübertragens der Daten im voreingestellten Neuübertragungsmodus einen voreingestellten Schwellwert überschreitet, ein Durchführen einer Neuübertragung höherer Ebene an den Daten auf mindestens eine der folgenden Weisen:
Auslösen einer Datenneuübertragung entsprechend einer Radio Link Layer Control Protocol-, RLC, -Ebene;
Anfragen eines ersten Statusbericht der Neuübertragung der Daten bei der Netzwerkseite durch integrales Abfragen der Daten und Neuübertragen der Daten entsprechend dem ersten Statusbericht; und
Anfragen eines zweiten Statusberichts der Neuübertragung jedes Datenpakets bei der Netzwerkseite durch separates Abfragen jedes Datenpakets der Daten und Neuübertragen der Daten entsprechend dem zweiten Statusbericht jedes Datenpakets.

9. Datenneuübertragungsvorrichtung, umfassend:
ein Bestimmungsmodul (92), das konfiguriert ist, um die neuzuübertragenden Daten zu bestimmen; und
ein Neuübertragungsmodul (94), das konfiguriert ist, um die Daten durch Verwendung eines voreingestellten Neuübertragungsmodus neuzuübertragen,
wobei der voreingestellte Neuübertragungsmodus mindestens eines aus: Neuübertragen der Daten mittels Multi-Access-Signatur, MA-Signatur, angezeigt von einer Netzwerkseite durch einen Downlink-Steuerkanal; und Neuübertragen der Daten mittels einer Kennung eines Endgeräts und der von der Netzwerkseite durch den Downlink-Steuerkanal angezeigten MA-Signatur umfasst;
wobei das Bestimmungsmodul umfasst:
eine Bestimmungseinheit (102), die konfiguriert ist, um die neuzuübertragenden Daten entsprechend einer von der Netzwerkseite durch den Downlink-Steuerkanal gesendeten Anzeige, wobei die Anzeige eine ACK oder eine NACK umfasst; und
**dadurch gekennzeichnet, dass**
die Bestimmungseinheit (102) ferner konfiguriert ist, um:
an einer voreingestellten Ressourcenposition, eine Konfliktauflösungs-ID von der Netzwerkseite zu überwachen, wobei die voreingestellte Ressourcenposition nach einer Ressource lokalisiert ist, an der die ACK empfangen wird; und
die neuzuübertragenden Daten entsprechend der Konfliktauflösungs-ID zu bestimmen oder die neuzuübertragenden Daten entsprechend der Konfliktauflösungs-ID und einem Radio Link Layer Control Protocol-, RLC, -Statusbericht zu bestimmen.

10. Vorrichtung nach Anspruch 9, wobei der voreingestellte Neuübertragungsmodus ferner mindestens eines der folgenden umfasst:
zufälliges Neuübertragen der Daten entsprechend einer Back-Off-Zeit;
Neuübertragen der Daten an einer von der Netzwerkseite spezifizierten Ressourcenposition;
Neuübertragen der Daten entsprechend einer von der Netzwerkseite durch den Downlink-Steuerkanal gesendeten Anzeige, wobei die Anzeige eine ACK oder eine NACK umfasst;
Neuübertragen der Daten entsprechend einer von einem voreingestellten Algorithmus bestimmten Ressourcenposition; und
Neuübertragen der Daten an einer zufällig ausgewählten Ressourcenposition.

11. Computerlesbares Speichermedium, auf dem computerausführbare Anweisungen gespeichert sind, wobei die computerausführbaren Anweisungen bei Ausführung auf einem Computer das Verfahren nach einem der Ansprüche 1 bis 8 ausführen.

## Revendications

1. Méthode de retransmission de données, comprenant :
la détermination (502) de données devant être retransmises ;
la retransmission (504) des données à l'aide d'un mode de retransmission prédéfini, dans laquelle le mode de retransmission prédéfini comprend au moins l'une parmi : la retransmission des données en utilisant une signature multi-accès, signature MA, indiquée par un côté réseau par le biais d'un canal de commande de liaison descendante ; et la retransmission des données en utilisant un identifiant, ID, d'un terminal et la signature MA indiquée par le côté réseau par le biais du canal de commande de liaison descendante ;
dans laquelle la détermination (502) des données devant être retransmises comprend : la détermination des données devant être retransmises selon une indication envoyée par le côté réseau par le biais du canal de commande de liaison descendante, dans laquelle l'indication comprend un accusé de réception, ACK, ou un accusé de réception négatif, NACK ; et
**caractérisé en ce que**
la détermination des données devant être retransmises selon l'ACK envoyé par le côté réseau par le biais du canal de commande de liaison descendante comprend :
la surveillance, à une position de ressource prédéfinie, d'un ID de résolution de conflit à partir du côté réseau, dans laquelle la position de ressource prédéfinie est située après une ressource où l'ACK est reçu ; et
la détermination des données devant être retransmises selon l'ID de résolution de conflit ou la détermination des données devant être retransmises selon l'ID de résolution de conflit et un rapport de statut de protocole de commande de couche de liaison radio, RLC.

2. Méthode selon la revendication 1, dans laquelle le mode de retransmission prédéfini comprend au moins l'une parmi :
la retransmission de manière aléatoire des données selon un délai d'interruption ;
la retransmission des données à une position de ressource spécifiée par le côté réseau ;
la retransmission des données selon une indication envoyée par le côté réseau par le biais du canal de commande de liaison descendante, dans laquelle l'indication comprend un accusé de réception, ACK, ou un accusé de réception négatif, NACK ;
la retransmission des données à une position de ressource déterminée selon un algorithme prédéfini ; et
la retransmission des données à une position de ressource sélectionnée de manière aléatoire.

3. Méthode selon la revendication 1 ou 2, dans laquelle le canal de commande de liaison descendante comprend un canal de commande de liaison descendante physique, PDCCH, ou un canal d'indicateur de requête de répétition automatique hybride physique, PHICH ; et l'indication est brouillée par le biais d'un identifiant temporaire de réseau radio prédéfini.

4. Méthode selon la revendication 1 ou 2, dans laquelle l'indication est acquise par au moins l'une des manières suivantes :
l'acquisition de l'indication par le biais de la signature MA ; et
l'acquisition de l'indication selon une information d'identification initiale des données.

5. Méthode selon la revendication 1, dans laquelle l'ID de résolution de conflit comprend au moins l'un parmi :
des bits de données ; et
un identifiant de couche supérieure.

6. Méthode selon la revendication 2, dans laquelle la retransmission de manière aléatoire des données selon le délai d'interruption comprend :
la sélection de manière aléatoire d'un temps de retransmission au sein d'une plage de temps prédéfinie ; et
la retransmission de manière aléatoire des données pendant le temps de retransmission en utilisant un paramètre de transmission qui a été utilisé lors d'une transmission initiale des données.

7. Méthode selon la revendication 6, dans laquelle la plage de temps prédéfinie est déterminée d'au moins l'une des manières suivantes :
la plage de temps prédéfinie est décidée en accord avec le côté réseau ; et
la plage de temps prédéfinie est indiquée par le côté réseau.

8. Méthode selon la revendication 1, comprenant en outre : lors de la détermination qu'un nombre d'échecs de retransmission des données dans le mode de retransmission prédéfini dépasse une valeur seuil prédéfinie, la réalisation d'une retransmission de couche supérieure sur les données d'au moins l'une des manières suivantes :
le déclenchement d'une retransmission de données de couche de protocole de commande de couche de liaison radio, RLC ;
la requête, auprès du côté réseau, d'un premier rapport de statut de transmission des données par l'interrogation, de manière unifiée, des données, et la retransmission des données selon le premier rapport de statut ; et
la requête, auprès du côté réseau, d'un second rapport de statut de transmission chaque paquet de données par l'interrogation, de manière séparée, des données, et la retransmission des données selon le second rapport de statut de transmission de chaque paquet de données.

9. Appareil de retransmission de données, comprenant :
un module de détermination (92), configuré pour déterminer des données devant être retransmises ; et
un module de retransmission (94), configuré pour retransmettre les données en utilisant un mode de retransmission prédéfini,
dans lequel le mode de retransmission prédéfini comprend au moins l'une parmi : la retransmission des données en utilisant une signature multi-accès, signature MA, indiquée par un côté réseau par le biais d'un canal de commande de liaison descendante ; et la retransmission des données en utilisant un identifiant d'un terminal et la signature MA indiquée par le côté réseau par le biais du canal de commande de liaison descendante ;
dans lequel le module de détermination comprend :
une unité de détermination (102), configurée pour déterminer les données devant être retransmises selon une indication envoyée par le côté réseau par le biais du canal de commande de liaison descendante, dans lequel l'indication comprend un accusé de réception, ACK, ou un accusé de réception négatif, NACK ; et
**caractérisé en ce que**,
l'unité de détermination (102) est en outre configurée pour :
surveiller, à une position de ressource prédéfinie, un ID de résolution de conflit à partir du côté réseau, dans lequel la position de ressource prédéfinie est située après une ressource où l'ACK est reçu ; et
déterminer les données devant être retransmises selon l'ID de résolution de conflit ou déterminer les données devant être retransmises selon l'ID de résolution de conflit et un rapport de statut de protocole de commande de couche de liaison radio, RLC.

10. Appareil selon la revendication 9, dans lequel le mode de retransmission prédéfini comprend en outre au moins l'une parmi :
la retransmission de manière aléatoire des données selon un délai d'interruption ;
la retransmission des données à une position de ressource spécifiée par le côté réseau ;
la retransmission des données selon une indication envoyée par le côté réseau par le biais du canal de commande de liaison descendante, dans lequel l'indication comprend un ACK ou un NACK;
la retransmission des données selon une position de ressource déterminée par un algorithme prédéfini ; et
la retransmission des données à une position de ressource sélectionnée de manière aléatoire.

11. Support de stockage lisible par ordinateur, stockant des instructions exécutables par ordinateur, dans lequel les instructions exécutables par ordinateur, lors de leur exécution sur un ordinateur, mettent en œuvre le procédé selon l'une quelconque des revendications 1 à 8.
